# EUROPÄISCHE PATENTANMELDUNG

(11) **EP 2 500 691 A2**
(43) Veröffentlichungstag der Anmeldung: **19.09.2012**
(21) Anmeldenummer: 12001633.2
(22) Anmeldetag: 09.03.2012
(51) Int. Cl.: G01C 21/00

(54) **Flurförderzeug mit einer Datenkommunikationseinrichtung**

(30) Priorität: 12.03.2011 DE 102011013781
(71) Anmelder: Jungheinrich Aktiengesellschaft, 22047 Hamburg (DE)
(72) Erfinder: Schulz, Eckhard, 24558 Henstedt-Ulzburg (DE); Von Werder, Martin, 22949 Ammersbek (DE)
(74) Vertreter: Hauck Patent- und Rechtsanwälte

(57) **Zusammenfassung**

Flurförderzeug mit einer Datenkommunikationseinrichtung, die über eine Schnittstelle von einem Lagerverwaltungssystem und/oder einem Staplerleitsystem Daten zu auszuführenden Aufträgen empfängt, und mit einer Positionserfassungseinrichtung, die in einem vorbestimmten Lagerbereich die Position und die Orientierung des Flurförderzeugs erfasst, wobei eine Steuereinheit vorgesehen ist, die aus den Daten des auszuführenden Auftrags die anzufahrende Lagerposition und eine Zielhubhöhe ermittelt, die Zielhubhöhe dem Fahrer anzeigt und die anzufahrende Lagerposition mit der aktuellen Position und Orientierung des Flurförderzeugs aus der Positionserfassung vergleicht, um einen Abstand und eine Richtung für die anzufahrende Lagerposition zu ermitteln.

## Beschreibung

Die vorliegende Erfindung betrifft ein Flurförderzeug mit einer Datenkommunikationseinrichtung, die über eine Schnittstelle von einem Lagerverwaltungssystem Daten zu auszuführenden Aufträgen empfängt.

Flurförderzeuge werden in der Regel zum Transport von Waren und Ladungsgütern eingesetzt. Diese werden an festgelegten Lagerplätzen und Warenumschlagsstationen an bestimmten Orten aufgenommen und abgesetzt. Die Lagerplätze sind üblicherweise eindeutig gekennzeichnet und können in einem elektronischen Lagerverwaltungssystem eindeutig mit den an den Lagerplätzen befindlichen Waren und Ladungsgütern verknüpft werden. Staplerleitsysteme und/oder Verwaltungssysteme können dem Bediener des Flurförderzeugs bestimmte Fahraufträge vorgeben. Die Fahraufträge umfassen beispielsweise einen Quell- und/oder einen Ziellagerplatz, der auf einem Display des Flurförderzeugs für den Bediener angezeigt werden.

Die Aufgabe des Fahrers besteht bei der Ausführung eines empfangenen Auftrags darin, den jeweils richtigen Lagerplatz anzufahren, um dort abgestelltes Lagergut entweder aufzunehmen oder abzusetzen.

Aus EP 2 154 478 A1 ist ein Verfahren zur Fahrerunterstützung bei einem Flurförderzeug bekannt geworden, bei dem das Flurförderzeug eine Ortungsvorrichtung zur Ermittlung seiner Position, eine Anzeigevorrichtung zur Darstellung von Informationen für den Fahrer und einen mit der Ortungsvorrichtung und der Anzeigevorrichtung verbundenen Steuerungscomputer aufweist. In einem ersten Schritt wird eine angefahrene Zielposition durch den Steuerungscomputer empfangen und nachfolgend die Position des Flurförderzeugs durch die Ortungsvorrichtung bestimmt. Anschließend wird ein optimaler Anfahrtsweg zu der Zielposition durch den Steuerungscomputer berechnet und schließlich der berechnete Anfahrweg und/oder die Anweisung für die Fahrtrichtung dem Fahrer durch die Anzeigevorrichtung angezeigt.

Der Erfindung liegt die Aufgabe zugrunde, mit möglichst einfachen Mitteln dem Fahrer eines Flurförderzeugs eine Hilfestellung bei der Abwicklung von empfangenen Transportaufträgen bereitzustellen.

Erfindungsgemäß wird die Aufgabe durch ein Flurförderzeug mit den Merkmalen aus Anspruch 1 gelöst. Das erfindungsgemäße Flurförderzeug ist mit einer Datenkommunikationseinrichtung und mit einer Positionserfassungseinrichtung ausgestattet. Die Datenkommunikationseinrichtung empfängt über eine Schnittstelle von einem Verwaltungssystem und/oder einem Staplerleitsystem Daten zu auszuführenden Aufträgen. In der nachfolgenden Anmeldung wird jedes elektronisches Datenverarbeitungssystem, das Transportaufträge über die Schnittstelle an das Flurförderzeug übermitteln kann als ein Lagerverwaltungssystem aufgefasst, auch wenn dieses im Hinblick auf die Verwaltung des Lagers nur eine sehr eingeschränkte oder überhaupt keine Funktionalität besitzt, wie beispielsweise ein Staplerleitsystem. Die Positionserfassungseinrichtung kann in einem vorbestimmten Lagerbereich die Position und die Orientierung des Flurförderzeugs erfassen. Bei der Positionserfassungseinrichtung kann es sich um eine Einrichtung handeln, die Position und Orientierung gemeinsam erfasst. Es ist aber auch möglich, dass die Positionserfassungseinrichtung separate Mittel zur Erfassung von Position und Orientierung aufweist. Das erfindungsgemäße Flurförderzeug ist mit einer Steuereinheit ausgestattet, die aus den Daten des auszuführenden Auftrags die anzufahrende Lagerposition ermittelt und mit der aktuellen Position des Flurförderzeugs aus der Positionserfassung vergleicht. Die Daten des auszuführenden Lagerauftrags können je nach Ausgestaltung der Schnittstelle verschiedene Informationen enthalten. Die Steuereinheit wertet erfindungsgemäß diejenigen Daten aus, die sich auf die anzufahrende Position beziehen, unabhängig davon, ob es sich hierbei um einen Ort handelt, an dem Lagergut aufgenommen oder um einen Ort, an dem Lagergut abgesetzt werden soll. Aus dem Vergleich der aktuellen Position des Flurförderzeugs und der anzufahrenden Lagerposition ermittelt die Steuereinheit den Abstand zu der anzufahrenden Position. Ebenfalls ermittelt die Steuereinheit aus der aktuellen Orientierung des Flurförderzeugs eine Richtung für die anzufahrende Lagerposition. Beide Informationen helfen dem Benutzer des Flurförderzeugs den anzufahrenden Lagerort zielstrebig direkt anzufahren, ohne dass er über genaue Ortskenntnisse im Lagerbereich verfügen muss. Darüber hinaus erlaubt die von der Steuereinheit bereitgestellte Information zu Abstand und Richtung der anzufahrenden Position, diese zielgenau anzufahren, so dass ein Manövrieren im Bereich der Lagerposition dann nicht notwendig ist.

Erfindungsgemäß ermittelt die Steuereinheit zusätzlich aus den Daten des auszuführenden Auftrags eine Zielhubhöhe, bei der das aufzunehmende oder abzusetzende Lagergut sich befindet bzw. abgesetzt werden soll. Die von der Steuereinheit ermittelte Zielhubhöhe wird dem Fahrer ebenfalls angezeigt, so dass er bereits bei der Anfahrt an die Lagerposition weiß, welche Höhe das Lasttragmittel besitzen soll.

In einer bevorzugten Weiterbildung ist das Flurförderzeug mit einer Hubhöhenerfassung ausgestattet, die die aktuelle Hubhöhe eines Lasttragmittels erfasst, wobei die Steuereinheit die erfasste Hubhöhe mit der Zielhubhöhe vergleicht, um einen Abstand der erfassten Hubhöhe von der Zielhubhöhe anzuzeigen. Indem nicht auf absolute Werte für die Zielhubhöhe oder vordefinierte Höhen der Lagerpositionen abgestellt wird, wird für den Fahrer eine Assistenz geschaffen, die ihm sinnfällig anzeigt, ob das Lasttragmittel bereits die Zielhubhöhe erreicht hat oder noch für den angezeigten Abstand zu hoch oder zu niedrig ist.

In einer weiteren bevorzugten Ausgestaltung wird ausgenutzt, dass für das Flurförderzeug die aktuelle Position und die aktuelle Orientierung bekannt sind. Für eine Anfahrt in die Lagerposition stellt die Steuereinheit die aktuelle Position und die aktuelle Orientierung des Flurförderzeugs relativ zu einer Anfahrtslinie der Lagerposition dar. In der Regel wird eine Lagerposition senkrecht angefahren, um das Lagergut aufnehmen oder absetzen zu können. Die senkrechte Anfahrt zu einer Lagerposition bildet dann die Anfahrtslinie relativ zu der die aktuelle Position und Orientierung des Flurförderzeugs angezeigt wird. Der besondere Vorteil hier ist, dass ein Rangieren des Flurförderzeugs unmittelbar vor der angefahrenen Lagerposition unterbleiben kann.

Um die Aufmerksamkeit des Fahrers während der Fahrt nicht abzulenken, ist in einer vorteilhaften Weiterbildung vorgesehen, dass die Steuereinheit die Anfahrtslinie erst anzeigt, wenn der Abstand zu der anzufahrenden Lagerposition einen vorbestimmten Abstand unterschritten hat. Ebenfalls kann vorgesehen sein, dass eine Anzeige des Abstandes zur Zielhubhöhe erst in unmittelbarer Nähe zu der angefahrenen Lagerposition angezeigt wird.

In einer weiteren bevorzugten Ausgestaltung zeigt die Steuereinheit zusätzlich auch die Orientierung relativ zu der anzufahrenden Lagerposition an. Hierdurch kann der Fahrer des Flurförderzeugs sein Einschwenken auf die Anfahrtslinie selbständig wählen.

Die vorgesehene Erfindung wird nachfolgend anhand eines Ausführungsbeispiels näher erläutert. Es zeigt:
- Fig. 1: einen Überblick über ein erfindungsgemäße Flurförderzeug in einem Lager,
- Fig. 2: die Anfahrt eines Flurförderzeugs an einen Lagerplatz bei nicht korrekter Ausrichtung des Flurförderzeugs,
- Fig. 3: die Anfahrt eines Flurförderzeugs an den Lagerplatz bei korrekter Ausrichtung des Flurförderzeugs und nicht ausreichender Hubhöhe, und
- Fig. 4: die Anfahrt eines Flurförderzeugs an eine Lagerposition bei korrekter Orientierung des Flurförderzeugs und ausreichender Hubhöhe.

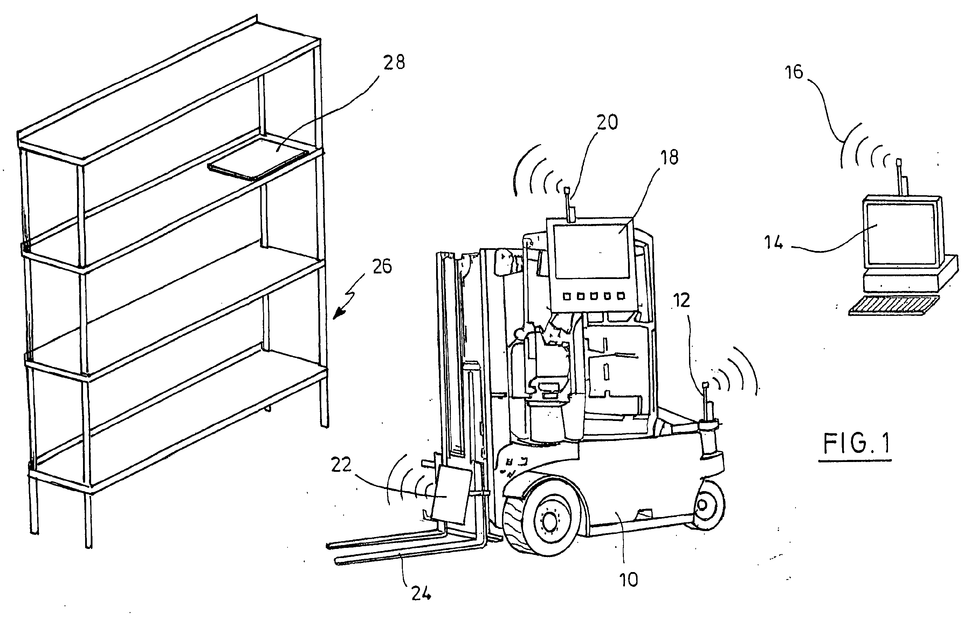

Fig. 1 zeigt in einer schematischen Ansicht ein Flurförderzeug 10, das über eine Antenne 12 mit einem Lagerverwaltungssystem 14 kommuniziert. Das Lagerverwaltungssystem 14 ist schematisch vereinfacht als PC mit Monitor dargestellt. Das Lagerverwaltungssystem, bei dem es sich auch um ein Staplerleitsystem handeln kann, generiert Aufträge für einzelne Flurförderzeuge 10, die über Funk 16 gesendet und von der Antenne 12 empfangen werden. Die empfangenen Lageraufträge werden über eine Anzeige 16 dem Fahrer angezeigt. Zur besseren Übersicht wurde die Anzeige 16 vergrößert dargestellt. In einer praktischen Ausgestaltung kann die Anzeige 16 in der Fahrerkabine vorgesehen sein und dort an einer gut sichtbaren Position in einer entsprechenden Größe beispielsweise in die Verkleidung integriert sein.

Das erfindungsgemäße Flurförderzeug besitzt ferner Antennen 20 und 22, die Signale zur Positionserfassung des Flurförderzeugs 10 empfangen. Je nach Ausgestaltung der Positionserfassung können eine oder beide Antenne 20, 22 eingesetzt werden. Wird beispielsweise die Positionserfassung mit Hilfe von in dem Lager montierten RFID-Transpondern eingesetzt, so wird bevorzugt eine am Lasttragmittel 24 montierte Antenne verwendet. Wird dagegen eine Positionserfassung verwendet, bei der beispielsweise eine im Lager optisch erfasste Position des Flurförderzeugs über Funk übermittelt wird, so kann die Antenne 20 für die Positionserfassung eingesetzt werden.

Das Lager 26 ist in Fig. 1 stark vereinfacht dargestellt. Grundsätzlich besteht jedes Lager unabhängig von seinem Aufbau, ob als Regallagerplatz oder Blocklagerbereich, aus definierten Lagerplätzen 28, die durch ihre Position im Lager und ihre Höhe eindeutig gekennzeichnet sind.

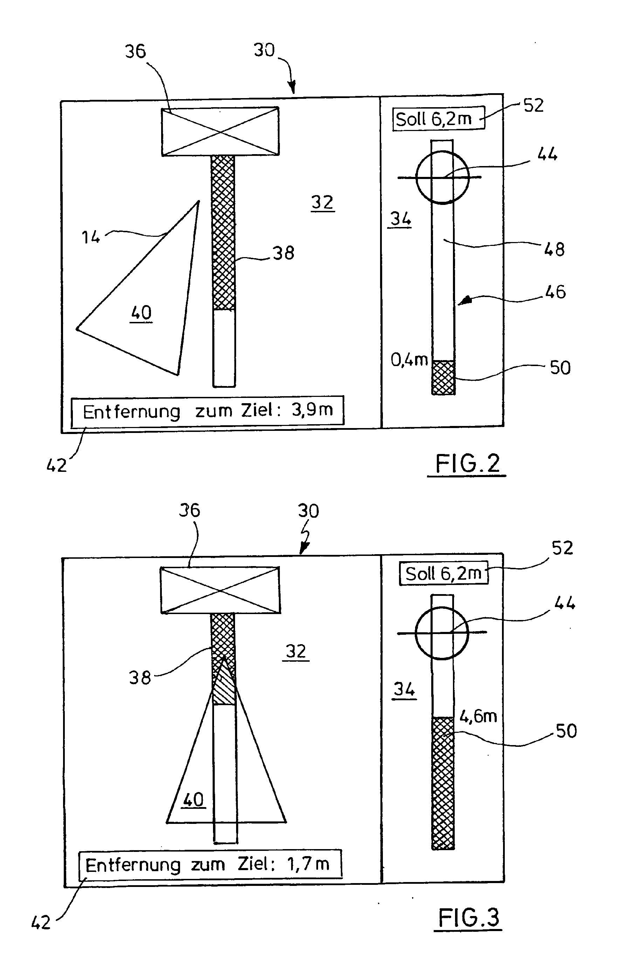

Im Betrieb des erfindungsgemäßen Flurförderzeugs wird ein Auftrag für das Flurförderzeug in dem Lagerverwaltungssystem 14 generiert und per Funk 16 an das Flurförderzeug übermittelt. Der Fahrauftrag wird von einer Steuereinheit, die beispielsweise in das Gehäuse der Anzeige 18 integriert sein kann, dahin ausgewertet, dass die Lagerposition 28 und die zugehörige Zielhubhöhe der Lagerposition 28 ermittelt wird. Über die mit Hilfe der Antennen 20 und/oder 22 empfangenen Positionssignale des Flurförderzeugs kann die Steuereinheit dann den Abstand und die Orientierung des Flurförderzeugs berechnen. Eine Möglichkeit, die so berechneten Daten übersichtlich anzuzeigen, wird anhand der Fign. 2 bis 4 näher erläutert:

Fig. 2 zeigt ein Display 30, das in zwei Teile 32 und 34 unterteilt ist. Der linke Teil 32 zeigt symbolisch die anzufahrende Lagerposition 36 an. Um für den Benutzer den Inhalt der Anzeige 32 leicht erfassbar zu machen, befindet sich die Lagerposition 36 stets an der gleichen Stelle im Display. Zu der dargestellten Lagerposition 36 wird eine Anfahrtslinie 38 auf dem Display dargestellt. In dem Ausführungsbeispiel ist die Anfahrtslinie senkrecht zur Breitseite der Lagerposition 36. Sofern aufgrund der Lagertopologie und/oder des Aufbaus des Flurförderzeugs eine andere Anfahrtslinie als ideal für die Lagerposition 36 angesehen wird, kann diese entsprechend dargestellt werden.

Zusätzlich zu der Anfahrtslinie 38 wird das Flurförderzeug schematisch als ein gleichschenkliges Dreieck 14 dargestellt. Der spitze Winkel zeigt hierbei die Fahrtrichtung des Flurförderzeugs und verdeutlicht mithin seine Orientierung an. Zusätzlich erfolgt eine alphanumerische Anzeige, die den Abstand des Flurförderzeugs 40 von der Lagerposition 36 anzeigt. Der Abstand des Flurförderzeugs wird entlang der Anfahrtslinie 38 zusätzlich durch einen Balken 42 (dunkel dargestellt) leicht verständlich angezeigt. Je größer der Balken 42 dargestellt ist, umso größer ist der Abstand des Flurförderzeugs 40 von der Lagerposition 36.

Der zweite Teil 34 der Anzeige 30 dient dazu, die Zielhubhöhe 44 anzuzeigen. Auch hier ist für die bessere Erfassbarkeit der Anzeige vorgesehen, dass die Zielhubhöhe 44 stets an der gleichen Position der Anzeige 34 dargestellt wird. Die Isthubhöhe 46 wird innerhalb eines Balkendiagrams 48 als dunkler Bereich 50 dargestellt. Zusätzlich ist eine alphanumerische Anzeige 52 für die Zielhubhöhe vorgesehen.

Fig. 3 zeigt das Flurförderzeug 40 in einer anderen Orientierung und in einem anderen Abstand zu der Lagerposition 36. Deutlich zu erkennen ist, dass die Spitze des gleichschenkligen Dreiecks nunmehr auf die Lagerposition 36 weist, so dass die Fahrtrichtung des Flurförderzeugs entlang der Fahrtlinie verläuft. Ferner ist zu erkennen, dass der Abstand des Flurförderzeugs 40 in Fig. 3 kleiner als der Abstand in Fig. 2 ist, so dass der dunkle Teil der Anfahrtslinie 38 kürzer dargestellt ist. Zur Verdeutlichung, dass die Ausrichtung des Flurförderzeugs 40 der Anfahrtslinie 38 entspricht, ist der dunkle Bereich 38 der Abstandsanzeige heller dargestellt.

Im Hinblick auf die Zielhubhöhe 44 ist in Fig. 3 zu erkennen, dass die tatsächliche Hubhöhe 50 noch nicht die Zielhubhöhe erreicht hat, sondern noch unterhalb dieser liegt.

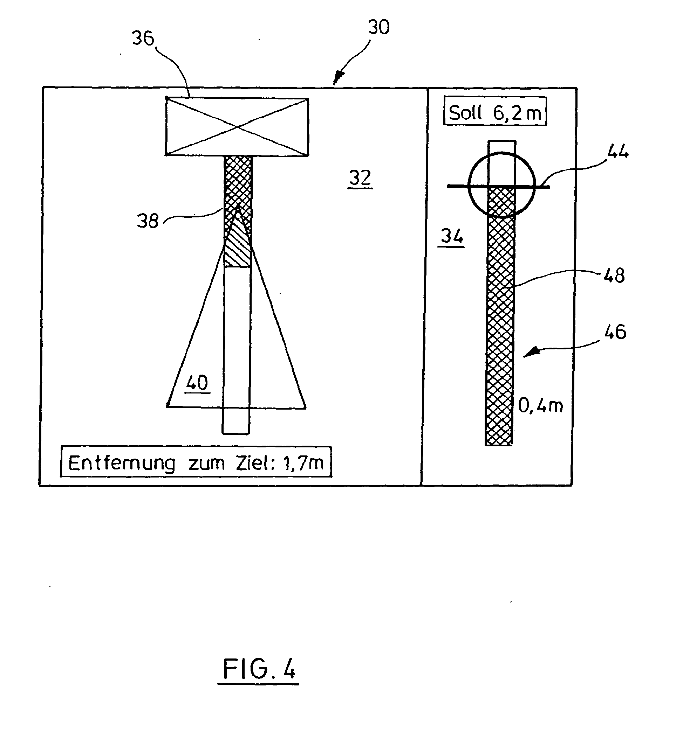

Fig. 4 zeigt für die Hubhöhenanzeige 34, dass die Zielhubhöhe von 6,2 m erreicht wurde. Zur Verdeutlichung hat die Farbe des dargestellten Balkens 50 von einer dunklen zu einer hellen Farbe gewechselt. Die Position des Flurförderzeugs relativ zu der Lagerposition 36 ist in Fig. 4 unverändert gegenüber Fig. 3.

## Patentansprüche

1. Flurförderzeug (10) mit einer Datenkommunikationseinrichtung, die über eine Schnittstelle von einem Lagerverwaltungssystem (14) und/oder einem Staplerleitsystem Daten zu auszuführenden Aufträgen empfängt, und mit einer Positionserfassungseinrichtung, die in einem vorbestimmten Lagerbereich die Position und die Orientierung des Flurförderzeugs erfasst, **dadurch gekennzeichnet, dass**
eine Steuereinheit vorgesehen ist, die aus den Daten des auszuführenden Auftrags die anzufahrende Lagerposition (36) und eine Zielhubhöhe (44) ermittelt, die Zielhubhöhe dem Fahrer anzeigt und die anzufahrende Lagerposition mit der aktuellen Position und Orientierung des Flurförderzeugs (10) aus der Positionserfassungseinrichtung vergleicht, um einen Abstand und eine Richtung für die anzufahrende Lagerposition (36) zu ermitteln.

2. Flurförderzeug nach Anspruch 1, **dadurch gekennzeichnet, dass** eine Hubhöhenerfassung vorgesehen ist, die die aktuelle Hubhöhe (50) eines Lasttragmittels erfasst, wobei die Steuereinheit die erfasste Hubhöhe (50) mit der Zielhubhöhe (44) vergleicht, um einen Abstand der erfassten Hubhöhe von der Zielhubhöhe anzuzeigen.

3. Flurförderzeug nach einem der Ansprüche 1 oder 2, **dadurch gekennzeichnet, dass** die Steuereinheit die aktuelle Position des Flurförderzeugs relativ zu einer Anfahrtslinie (38) der Lagerposition (36) darstellt.

4. Flurförderzeug nach Anspruch 3, **dadurch gekennzeichnet, dass** die Steuereinheit die Anfahrtslinie (38) erst anzeigt, wenn der Abstand zu der anzufahrenden Lagerposition (36) einen vorbestimmten Abstandswert unterschritten hat.

5. Flurförderzeug nach einem der Ansprüche 1 bis 4, **dadurch gekennzeichnet, dass** die Steuereinheit die aktuelle Orientierung relativ zu der anzufahrenden Lagerposition (36) anzeigt.
